# EUROPEAN PATENT SPECIFICATION

(11) **EP 2 707 633 B1**
(45) Date of publication and mention of the grant of the patent: **20.01.2016**
(21) Application number: 12720678.7
(22) Date of filing: 26.04.2012
(51) Int. Cl.: F16L 3/10

(54) **PIPE CLIP**
ROHRSCHELLE
COLLIER DE FIXATION

(30) Priority: 10.05.2011 NL 2006755
(43) Date of publication of application: 19.03.2014
(73) Proprietor: J. van Walraven Holding B.V., 3641 RK Mijdrecht (NL)
(72) Inventor: JUZAK, Marek, NL-3641 ZS Mijdrecht (NL); VAN WALRAVEN, Jan, NL-3641 GP Mijdrecht (NL)
(74) Representative: EP&C
(86) International application number: PCT/NL2012/050281
(87) International publication number: WO 2012/154037

(56) References cited:
- EP-A2- 0 671 579
- EP-A2- 0 872 677
- DE-A1- 19 524 294
- DE-A1- 19 645 894
- US-A- 5 056 196

## Description

The present invention relates to a pipe clip for fastening a pipe to a wall, ceiling or another support, comprising:
- an annular clip body with an opening for attaching the pipe clip around the pipe, which opening is delimited by a first and a second end of the clip body, a first and second flange being monolithically formed with the clip body at the first and second end respectively and extending in a radial direction,
- a male fastening element comprising a head and a shank, the shank being associated with the first end and the head engaging the second end of the clip body for tightening the first and second end of the clip body together in a mounted state,
wherein the first flange is provided with a hole for passing through the shank of the male fastening element.

Such a pipe clip is known from for example US 5 056 196, DE 195 24 294 and EP 0 671 579. In these known pipe clips the second flange is provided with a slot which opens up in an edge of the flange. The male fastening element is a screw or bolt which is screwed in a nut and cannot swivel with respect to said nut. The nut is fixed with a hinging structure to the first flange such that the male fastening element can swivel with respect to the first flange, such that the shank can be introduced into the open ended slot.

Another type of pipe clip is disclosed in DE 196 45 894 A1. In this pipe clip the first and second flange are both provided with a hole with a closed contour. The male fastening element is a screw which is inserted through the hole in the second flange and then through the hole in the first flange. The male fastening element cannot swivel with respect to the second flange. The first flange is provided with a nut which has a half inner thread and on the opposite side has a conical surface. The nut can be swiveled through a hinge arrangement with respect to the first flange. When the shank of the male fastening element is pushed through the hole in the first flange and through the nut, said nut will swivel such that the threaded half of the inner side of the nut does not engage the shank of the screw and the outer thread of the screw will slide along the smoorth conical surface of the opposite side of the nut.

The present invention has for an object to provide an alternative pipe clip

This object is achieved by a pipe clip as described at the outset, wherein the pipe clip furthermore comprises a retainer element which is arranged on the first flange and which includes a holding shoe for holding the retainer element on the first flange as well as a hinged half nut with a screw thread section, wherein the half nut is connected to the holding shoe by a resilient hinge portion, the half nut being arranged such that, in use, one side of the shank of the male fastening element is engaged by the half nut and an opposite side of the shank is engaged by a shank engaging portion of the first flange

The shank engaging portion of the first flange is stationary and the half nut can be swiveled due to the resilient hinge portion. Thereby the shank of the male fastening element can be swiveled with respect to the first flange. The swivelling movement of the shank pushes the half nut down and in a radial outward direction.

The second flange may be provided with a slot which opens up at the radial outer end edge of the second flange for inserting the shank of the male fastening element. A slot in the second flange, which opens up in a lateral edge is also possible. This feature allows that when the shank swivels, such that the head moves towards the edge of the second flange in which the slot opens up, and such that the head moves beyond the edge, the shank can move into the slot in the second flange.

Preferably the half nut is arranged on the same side of the male fastening element as where the edge of the second flange is located in which the slot opens up. Swiveling of the shank of the male fastening element and introduction of the shank into the slot is best facilitated by such a configuration.

The clip body is preferably made of metal, preferably a strip of sheet metal, but may also be made of another suitable material, e.g. plastic material.

The retainer element may be made of metal, but may also be made of another suitable material, e.g. plastic. It is also possible to make the retainer element of a combination of two materials, e.g. a combination of metal and plastic material.

In a possible embodiment the resilient hinge portion of the retainer element is formed as a bent loop.

The holding shoe, the half nut and the resilient hinge portion are preferably formed monolithically.

The shank engaging portion of the first flange is preferably formed as a half nut, which preferably has a threaded section.

The shank engaging portion of the first flange and the half nut on the retention element may in one possible embodiment positioned opposite each other, but alternatively, may also be positioned mutually staggered in axial direction of the shank of the male fastening element.

In a possible embodiment the holding shoe comprises a top plate which extends on the side of the first flange that faces the second flange, which top plate has a recess which is in line with the hole in the first flange such that the shank of the male fastening element can pass, and wherein the holding shoe has lateral engagement portions for engaging and holding the first flange.

The recess in the top plate of the holding shoe is preferably formed as a slot which opens up at the end edge of the top plate that is remote from the free end of the flange.

Preferably, the lateral engagement portions are folded side portions of the top plate, which are slided over the lateral edges of the first flange.

In a possible embodiment the half nut of the first flange is formed such that in axial direction it at least partially extends from the first flange towards the second flange

In another possible embodiment the half nut of the first flange is formed such that in axial direction it at least partially extends from the first flange away from the second flange.

The half nut of the retainer element may be positioned at least partially in the hole in the first flange

The invention will be elucidated in the following detailed description with reference to the drawing, in which:
Fig. 1 shows in a view in perspective an embodiment of pipe clip according to the invention in a preassembly state,
Fig. 2 shows in a view in perspective the pipe clip of Fig .1 in anther preassembly state,
Fig. 3 shows in a view in perspective the pipe clip of Fig. 1 in a mounted state,
Fig. 4 shows in a view in perspective a retainer element of the pipe clip of Fig.1.
Fig. 5 shows in another view in perspective the retainer element of Fig. 4,
Fig. 6 illustrates in a view in perspective how the retainer element of Figs 4 and 5 is mounted on a flange of a pipe half of the pipe clip of Fig. 1, and
Fig. 7 illustrates in a view in perspective how the retainer element of Figs 4 and 5 is mounted on a flange of a pipe clip half of another pipe

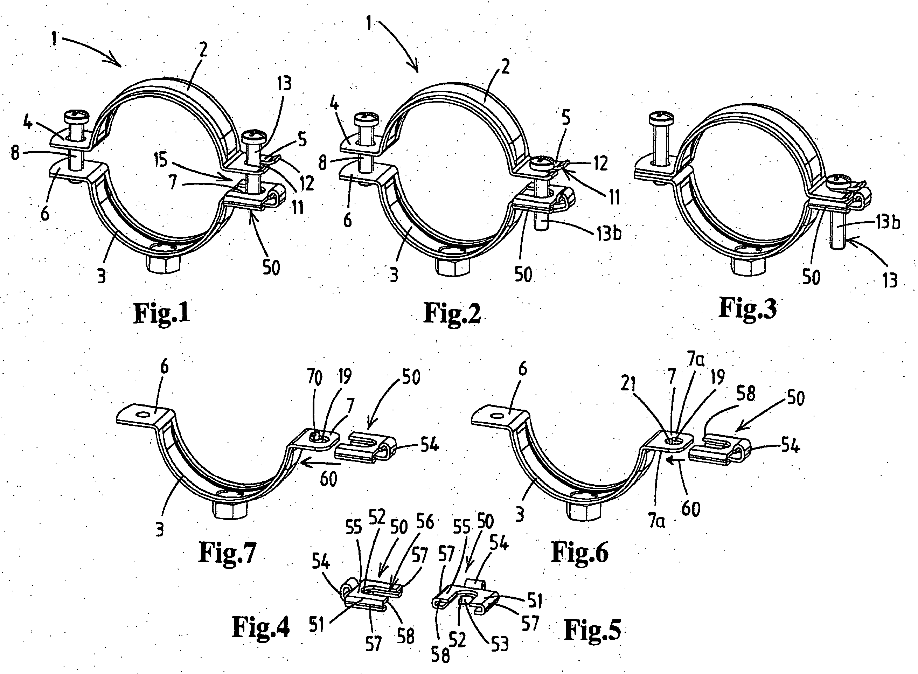

In Fig. 1 is shown a pipe clip 1 having an annular pipe clip body. The pipe clip body comprises two pipe clip halves 2 and 3 respectively, which are preferably formed out of metal. The first clip half 2 is provided at both ends with an integral radial outwardly extending flange 4 and 5 respectively. The second clip half 3 is formed with at both ends an integral radial outwardly extending flange 6 and 7 respectively. When fitted, the flange 4 of the first clip half 2 opposes the flange 6 of the second clip half 3, and the flange 5 of the first clip half 2 opposes the flange 7 of the second clip half 3.

The flanges 4 and 6 are connected by a screw 8, whereby a hinging connection is constituted such that the clip body can be opened to introduce a pipe (not shown) in the pipe clip 1. The flanges 5 and 7 thus define an opening 15 through which the pipe can be introduced. In line with the terminology in the claims, in the following the flange 7 will be referred to as the first flange and the flange 5 will be referred to as the second flange.

The second flange 5 is provided with a slot 11, which opens up at a radial end edge 12 of the second flange 5. In another embodiment, which is not shown, the second flange 5 may be provided with a slot that is open at a lateral edge of the flange.

The first flange 7 is provided with a hole 19 (cf. Fig. 6) for passing through the shank of the male fastening element 13. The male fastening element 13 is preferably a screw.

On the first flange 7 a retainer element 50 is arranged.

The retainer element 50 includes a holding shoe 51 for holding the retainer element 50 on the first flange 7. A hinged half nut 52 with a screw thread section 53 is provided. The half nut 52 is connected to the holding shoe 51 by a resilient hinge portion 54. The half nut 52 is arranged such that, in use, one side of the shank of the male fastening element 13 is engaged by the half nut 52 and an opposite side of the shank is engaged by a shank engaging portion 21 of the first flange 7. The shank engaging portion 21 of the first flange 7 is provided with screw thread section.

The holding shoe 51 comprises a top plate 55 which extends on the side of the first flange 7 that faces the second flange 5, as can be seen in Figs 1-3. The top plate 55 has a recess 56 which is in line with the hole 19 in the first flange 7 such that the shank 13b of the male fastening element 13 can pass. The recess 56 in the top plate 55 of the holding shoe 50 is formed as a slot 56 which opens up at the end edge 58 of the top plate 55 that is remote from the free end of the flange 7.

The holding shoe 50 has lateral engagement portions 57 for engaging and holding the first flange 7. The lateral engagement portions 57 are folded side portions of the top plate 55, as can be best seen in Fig 5. The folded side portions substantially have a U-shape in cross-section (see Fig. 5). During assembly, the folded side portions 57 are slid over the lateral edges 7a of the first flange 7, as is illustrated by the arrow 60 in Fig. 6,and engage the upper and lower side of the first flange 7.

In the embodiment of Figs 1-3 and 6 the shank engaging portion 21 of the first flange and the half nut 52 on the retention element 50 are positioned opposite each other. Alternatively it is also possible that the shank engaging portion of the first flange 7 extends from the side facing the flange 5 towards that flange 5. This is illustrated in Fig. 7, where the shank engaging portion is indicated with reference numeral 70. The shank engaging portion 70 may be provided with a threaded section. The retainer element 50 is the same as described before. Thus the shank engaging portion 70 of the flange 7 and the shank engaging portion 52 of the retainer element 50 are positioned mutually staggered seen in the axial direction of the shank 13b. The specific shape of the recess 56 in the top plate 55 as shown in the figures allows that the end 58 of the top plate 55 can be slid beyond the shank engaging portion 70.

In use the screw 13 is held at its shank by the respective halve nuts 21 and 52. When the pipe clip 1 of Fig. 1 is closed, the first flange 7 and second flange 5 are moved towards each other. At a certain moment the head of the screw 13 engages the second flange 5. The force on the head of the screw 13 causes the screw to swivel (this state is not shown in the figures), such that the head moves towards the outer edge 12 of the second flange 5. The swivelling movement of the screw 13 pushes the half nut 52 down and in a radial outward direction. The other half nut 21 is stationary on the flange 7. When the screw head moves beyond the edge 12, the shank of the screw 13 can move into the slot 11 in the second flange 5 (see Fig. 1). The flanges 5 arid 7 can now be tightened together by pushing down the screw 13, which is illustrated in Figs 2 and 3. By pushing down the screw 13 the half nut 52 is moved down and moved outwards so as to make room for the threaded shank 13b to pass (see Fig. 2). When the flanges 5 and 7 are tightened together the half nut 52 can swivel back to its original position (see Fig. 3).

In the embodiment with the shank engaging part 70, the closing is substantially the same.

## Claims

1. Pipe clip (1) for fastening a pipe to a wall, ceiling or another support, comprising:
- an annular clip body with an opening (15) for attaching the pipe clip around the pipe, which opening (15) is delimited by a first and a second end of the clip body, a first flange (7) and second flange (5) being monolithically formed with the clip body at the first and second end respectively and extending in a radial direction,
- a male fastening element (13) comprising a head and a shank (13b), the shank being associated with the first end and the head engaging the second end of the clip body for tightening the first and second end of the clip body together in a mounted state,
wherein the first flange (7) is provided with a hole (19) for passing through the shank (13b) of the male fastening element (13),
and wherein the pipe clip comprises a retainer element (50) which is arranged on the first flange (7) and which includes a holding shoe (51) for holding the retainer element (50) on the first flange (7) as well as a hinged half nut (52) With a screw thread section (53), wherein said half nut (52) is connected to the holding shoe (51) by a resilient hinge portion (54), the half nut (52) being arranged such that, in use, one side of the shank (13b) of the male fastening element (13) is engaged by the half nut (52) and an opposite side of the shank (13b) is engaged by a shank engaging portion (21; 70) of the first flange (7).

2. Pipe clip according to claim 1, wherein the clip body is made of metal or of plastic material.

3. Pipe clip according to any one of claims 1-2, wherein the retainer element (50) is made of metal or of plastic material, or is made of a combination of metal and plastic material.

4. Pipe clip according to any one of the preceding claims, wherein the resilient hinge portion (54) is formed as a bent loop.

5. Pipe clip according to any one of the preceding claims, wherein the holding shoe (51), the half nut (52) and the resilient hinge portion (54) are formed monolithically.

6. Pipe clip according to any one of the preceding claims, wherein the shank engaging portion (21; 70) of the first flange (7) is formed as a half nut.

7. Pipe clip according to any one of the preceding claims, wherein the shank engaging portion (21) of the first flange and the half nut (52) on the retainer element (50) are positioned opposite each other.

8. Pipe clip according to any one of the claims 1-6, wherein the shank engaging portion (70) of the first flange (7) and the half nut (52) on the retainer element (50) are positioned mutually staggered in axial direction of the shank (13b) of the male fastening element (13).

9. Pipe clip according to any one of the preceding claims, wherein the holding shoe (51) comprises a top plate (55) which extends on the side of the first flange (7) that faces the second flange (5), which top plate (55) has a recess (56) which is in line with the hole (9) in the first flange (7) such that the shank (13b) of the male fastening element (13) can pass, and wherein the holding shoe (51) has lateral engagement portions (57) for engaging and holding the first flange (7), wherein, preferably, the recess (56) in the top plate (55) of the holding shoe (51) is formed as a slot which opens up at the end edge (58) of the top plate (55) that is remote from the free end of the flange (7).

10. Pipe clip according to claim 9, wherein the lateral engagement portions (57) are folded side portions of the top plate (55), which are slid over the lateral edges (7a) of the first flange (7).

11. Pipe clip according to any one of the preceding claims, wherein the second flange (5) is provided with a slot (11) which opens up at the radial outer end edge (12) of the second flange (5) for inserting the shank (13b) of the male fastening element (13).

12. Pipe clip according to claim 11, wherein the hinged half nut (52) is arranged on the same side of the male fastening element (13) as where the edge of the second flange (5) is located in which the slot opens up,

13. Pipe clip according to claim 6, wherein the half nut (21; 70) of the first flange (7) is formed such that:
in axial direction it (70) at least partially extends from the first flange (7) towards the second flange (5); or in axial direction it (21) at least partially extends from the first flange (7) away from the second flange (5).

14. Pipe clip according to claim 6, wherein the half nut (21; 70) of the first flange (7) has a threaded section.

15. Pipe clip according to any one of the preceding claims, wherein the half nut (52) of the retainer element (50) is positioned at least partially in the hole (19) in the first flange (7).

## Patentansprüche

1. Rohrschelle (1) zum Befestigen eines Rohrs an einer Wand, Decke oder anderen Unterlage, Folgendes aufweisend:
- einen ringförmigen Schellenkörper mit einer Öffnung (15) zum Anbringen der Rohrschelle um das Rohr, welche Öffnung (15) durch ein erstes und ein zweites Ende des Schellenkörpers begrenzt ist, wobei ein erster Flansch (7) und ein zweiter Flansch (5) monolithisch mit dem Schellenkörper am ersten bzw. zweiten Ende ausgebildet sind und sich in einer radialen Richtung erstrecken,
- ein eingreifendes Befestigungselement (13), das einen Kopf und einen Schaft (13b) aufweist, wobei der Schaft mit dem ersten Ende verbunden ist und der Kopf das zweite Ende des Schellenkörpers in Eingriff nimmt, um das erste und zweite Ende des Schellenkörpers in einem montierten Zustand fest aneinander zu ziehen,
wobei der erste Flansch (7) mit einem Loch (19) zum Durchführen des Schafts (13b) des eingreifenden Befestigungselements (13) versehen ist,
und wobei die Rohrschelle ein Halterungselement (50) aufweist, das am ersten Flansch (7) angeordnet ist, und das einen Halteschuh (51) zum Halten des Halterungselements (50) am ersten Flansch (7) sowie eine angelenkte Halbmutter (52) mit einem Schraubengewindeabschnitt (53) aufweist, wobei die Halbmutter (52) mit dem Halteschuh (51) durch einen federelastischen Anlenkungsabschnitt (54) verbunden ist, wobei die Halbmutter (52) so angeordnet ist, dass im Gebrauch eine Seite des Schafts (13b) des eingreifenden Befestigungselements (13) durch die Halbmutter (52) in Eingriff genommen ist und eine entgegengesetzte Seite des Schafts (13b) durch einen Schafteingriffsabschnitt (21; 70) des ersten Flanschs (7) in Eingriff genommen ist.

2. Rohrschelle nach Anspruch 1, wobei der Schellenkörper aus Metall oder Kunststoff hergestellt ist.

3. Rohrschelle nach einem der Ansprüche 1 bis 2, wobei das Halterungselement (50) aus Metall oder Kunststoff oder aus einer Kombination von Metall und Kunststoff hergestellt ist.

4. Rohrschelle nach einem der vorhergehenden Ansprüche, wobei der federelastische Anlenkungsabschnitt (54) als gebogene Schlaufe ausgebildet ist.

5. Rohrschelle nach einem der vorhergehenden Ansprüche, wobei der Halteschuh (51), die Halbmutter (52) und der federelastische Anlenkungsabschnitt (54) monolithisch ausgebildet sind.

6. Rohrschelle nach einem der vorhergehenden Ansprüche, wobei der Schafteingriffsabschnitt (21; 70) des ersten Flanschs (7) als eine Halbmutter ausgebildet ist.

7. Rohrschelle nach einem der vorhergehenden Ansprüche, wobei der Schafteingriffsabschnitt (21) des ersten Flanschs und die Halbmutter (52) am Halterungselement (50) einander gegenüberliegend positioniert sind.

8. Rohrschelle nach einem der Ansprüche 1 bis 6, wobei der Schafteingriffsabschnitt (70) des ersten Flanschs (7) und die Halbmutter (52) am Halterungselement (50) in einer axialen Richtung des Schafts (13b) des eingreifenden Befestigungselements (13) zueinander versetzt positioniert sind.

9. Rohrschelle nach einem der vorhergehenden Ansprüche, wobei der Halteschuh (51) eine obere Platte (55) aufweist, die sich auf der Seite des ersten Flanschs (7) erstreckt, die dem zweiten Flansch (5) zugewandt ist, welche obere Platte (55) eine Ausnehmung (56) hat, die mit dem Loch (9) im ersten Flansch (7) übereinstimmt, so dass der Schaft (13b) des eingreifenden Befestigungselements (13) hindurchtreten kann, und wobei der Halteschuh (51) seitliche Eingriffsabschnitte (57) hat, um den ersten Flansch (7) in Eingriff zu nehmen und zu halten, wobei vorzugsweise die Ausnehmung (56) in der oberen Platte (55) des Halteschuhs (51) als Schlitz ausgebildet ist, der sich an dem Endrand (58) der oberen Platte (55) öffnet, der fern vom freien Ende des Flanschs (7) ist.

10. Rohrschelle nach Anspruch 9, wobei es sich bei den seitlichen Eingriffsabschnitten (57) um gefalzte Seitenabschnitte der oberen Platte (55) handelt, die über die Seitenränder (7a) des ersten Flanschs (7) geschoben sind.

11. Rohrschelle nach einem der vorhergehenden Ansprüche, wobei der zweite Flansch (5) mit einem Schlitz (11) versehen ist, der sich am radial äußeren Endrand (12) des zweiten Flanschs (5) zum Einsetzen des Schafts (13b) des eingreifenden Befestigungselements (13) öffnet.

12. Rohrschelle nach Anspruch 11, wobei die angelenkte Halbmutter (52) auf derselben Seite des eingreifenden Befestigungselements (13) angeordnet ist, wo sich der Rand des zweiten Flanschs (5) befindet, in dem sich der Schlitz öffnet.

13. Rohrschelle nach Anspruch 6, wobei die Halbmutter (21; 70) des ersten Flanschs (7) so ausgebildet ist, dass:
sie (70) sich in einer axialen Richtung zumindest teilweise vom ersten Flansch (7) zum zweiten Flansch (5) erstreckt; oder sie (21) sich in einer axialen Richtung teilweise vom ersten Flansch (7) weg vom zweiten Flansch (5) erstreckt.

14. Rohrschelle nach Anspruch 6, wobei die Halbmutter (21; 70) des ersten Flanschs (7) einen Gewindeabschnitt hat.

15. Rohrschelle nach einem der vorhergehenden Ansprüche, wobei die Halbmutter (52) des Halterungselements (50) zumindest teilweise in dem Loch (19) im ersten Flansch (7) positioniert ist.

## Revendications

1. Collier d'attache (1) pour solidariser un tuyau à un mur, un plafond ou un autre support, comprenant :
- un corps de collier annulaire doté d'une ouverture (15) pour fixer le collier d'attache autour du tuyau, laquelle ouverture (15) est délimitée par une première et une seconde extrémité du corps de collier, une première bride (7) et une seconde bride (5) étant formées monolithiquement avec le corps de collier au niveau de la première et de la seconde extrémité respectivement et s'étendant dans une direction radiale,
- un élément de solidarisation mâle (13) comprenant une tête et une queue (13b), la queue étant associée à la première extrémité et la tête enclenchant la seconde extrémité du corps de collier pour serrer la première et la seconde extrémité du corps de collier conjointement dans un état monté,
dans lequel la première bride (7) est pourvue d'un trou (19) pour traverser la queue (13b) de l'élément de solidarisation mâle (13),
et dans lequel le collier d'attache comprend un élément de retenue (50) qui est agencé sur la première bride (7) et qui inclut un sabot de tenue (51) pour tenir l'élément de retenue (50) sur la première bride (7) ainsi qu'un demi-écrou articulé (52) doté d'une section de filetage de vis (53), dans lequel ledit demi-écrou (52) est relié au sabot de tenue (51) par une partie d'articulation résiliente (54), le demi-écrou (52) étant agencé de sorte que, en utilisation, un côté de la queue (13b) de l'élément de solidarisation mâle (13) soit enclenché par le demi-écrou (52) et un côté opposé de la queue (13b) soit enclenché par une partie d'enclenchement de queue (21 ; 70) de la première bride (7).

2. Collier d'attache selon la revendication 1, dans lequel le corps de collier est réalisé en matériau métallique ou plastique.

3. Collier d'attache selon l'une quelconque des revendications 1 à 2, dans lequel l'élément de retenue (50) est réalisé en matériau métallique ou plastique, ou est réalisé en une combinaison de matériaux métallique et plastique.

4. Collier d'attache selon l'une quelconque des revendications précédentes, dans lequel la partie d'articulation résiliente (54) est formée comme une boucle courbée.

5. Collier d'attache selon l'une quelconque des revendications précédentes, dans lequel le sabot de tenue (51), le demi-écrou (52) et la partie d'articulation résiliente (54) sont formés monolithiquement.

6. Collier d'attache selon l'une quelconque des revendications précédentes, dans lequel la partie d'enclenchement de queue (21 ; 70) de la première bride (7) est formée comme un demi-écrou.

7. Collier d'attache selon l'une quelconque des revendications précédentes, dans lequel la partie d'enclenchement de queue (21) de la première bride et le demi-écrou (52) sur l'élément de retenue (50) sont positionnés opposés l'un à l'autre.

8. Collier d'attache selon l'une quelconque des revendications 1 à 6, dans lequel la partie d'enclenchement de queue (70) de la première bride (7) et le demi-écrou (52) sur l'élément de retenue (50) sont positionnés mutuellement en quinconce dans une direction axiale de la queue (13b) de l'élément de solidarisation mâle (13).

9. Collier d'attache selon l'une quelconque des revendications précédentes, dans lequel le sabot de tenue (51) comprend une plaque haute (55) qui s'étend sur le côté de la première bride (7) qui fait face à la seconde bride (5), laquelle plaque haute (55) comporte un évidement (56) qui est aligné avec le trou (9) dans la première bride (7) de sorte que la queue (13b) de l'élément de solidarisation mâle (13) puisse passer, et dans lequel le sabot de tenue (51) comporte des parties d'enclenchement latérales (57) pour enclencher et tenir la première bride (7), dans lequel, de préférence, l'évidement (56) dans la plaque haute (55) du sabot de tenue (51) est formé comme une fente qui s'ouvre au niveau du bord d'extrémité (58) de la plaque haute (55) qui est éloigné de l'extrémité libre de la bride (7).

10. Collier d'attache selon la revendication 9, dans lequel les parties d'enclenchement latérales (57) sont des parties de côté pliées de la plaque haute (55), qui sont coulissées sur les bords latéraux (7a) de la première bride (7).

11. Collier d'attache selon l'une quelconque des revendications précédentes, dans lequel la seconde bride (5) est pourvue d'une fente (11) qui s'ouvre au niveau du bord d'extrémité externe radial (12) de la seconde bride (5) pour insérer la queue (13b) de l'élément de solidarisation mâle (13).

12. Collier d'attache selon la revendication 11, dans lequel le demi-écrou articulé (52) est agencé sur le même côté de l'élément de solidarisation mâle (13) que là où est situé le bord de la seconde bride (5) dans laquelle la fente s'ouvre.

13. Collier d'attache selon la revendication 6, dans lequel le demi-écrou (21 ; 70) de la première bride (7) est formé de sorte que :
dans la direction axiale il (70) s'étende au moins partiellement de la première bride (7) vers la seconde bride (5), ou dans la direction axiale il (21) s'étende au moins partiellement de la première bride (7) en éloignement de la seconde bride (5).

14. Collier d'attache selon la revendication 6, dans lequel le demi-écrou (21 ; 70) de la première bride (7) comporte une section filetée.

15. Collier d'attache selon l'une quelconque des revendications précédentes, dans lequel le demi-écrou (52) de l'élément de retenue (50) est positionné au moins partiellement dans le trou (19) dans la première bride (7).
